# EUROPEAN PATENT SPECIFICATION

(11) **EP 1 509 434 B1**
(45) Date of publication and mention of the grant of the patent: **04.08.2010**
(21) Application number: 03735375.2
(22) Date of filing: 12.05.2003
(51) Int. Cl.: B60T 13/26, B60T 13/66

(54) **AN ELECTRONICALLY-CONTROLLED PARKING BRAKING SYSTEM FOR COMMERCIAL MOTOR VEHICLES**
ELEKTRONISCH GESTEUERTES FESTSTELLBREMSSYSTEM FÜR NUTZFAHRZEUGE
SYSTEME DE FREINAGE DE STATIONNEMENT A COMMANDE ELECTRONIQUE POUR VEHICULES MOTORISES COMMERCIAUX

(30) Priority: 16.05.2002 IT TO20020417
(43) Date of publication of application: 02.03.2005
(73) Proprietor: KNORR-BREMSE SISTEMI PER AUTOVEICOLI COMMERCIALI S.P.A., 20043 Arcore (Milano) (IT)
(72) Inventor: BATTISTELLA, Denis, I-20037 Paderno Dugnano (Milano) (IT); D'IMPERIO, Claudio, I-20058 Villasanta (Milano) (IT); RAPA, Antonio, I-20052 Monza (IT)
(74) Representative: Quinterno, Giuseppe
(86) International application number: PCT/EP2003/004926
(87) International publication number: WO 2003/097423

(56) References cited:
- US-A- 4 763 959
- US-A- 4 793 661
- US-A- 5 118 165

## Description

The present invention relates in general to braking systems for commercial motor vehicles and, more specifically, to an electronically-controlled parking braking system of the kind defined in the preamble of claim 1.

US-A-5 118 165 discloses a system of this kind including a tandem actuator comprising a service braking section and a parking/emergency braking section.

The object of the present invention is to provide an electronically controlled parking braking system for commercial motor vehicles which has considerable structural simplicity, reliable operation, and the ability to fulfil a plurality of operative functions and requirements.

This and other objects are achieved according to the invention by a parking braking system according to claim 1. Further characteristics and advantages of the invention will become clear from the following detailed description which is given purely by way of non-limiting example with reference to the appended drawings, in which:
Figure 1 is a schematic block diagram of a parking braking system according to the invention,
Figure 2 is a perspective view of a first embodiment of a control device included in a system according to the invention,
Figure 3 is a plan view from above of the control device of Figure 2,
Figures 4 and 5 are sections taken on the lines IV-IV and V-V of Figure 3,
Figure 6 is a section taken on the line VI-VI of Figure 4,
Figure 6a is a perspective view of an auxiliary release member,
Figure 7 is a plan view from below of the control device of Figures 2 to 6,
Figure 8 is an exploded perspective view which shows an embodiment of a detection unit included in a braking system according to the invention,
Figure 9 is a side view which shows the control device of Figures 2-7 connected to the detection unit of Figure 8,
Figure 10 is a section taken on the line X-X of Figure 9,
Figure 11 is a section taken on the line XI-XI of Figure 10,
Figure 12 is a side view which shows a second embodiment of a manually-operated control device for a system according to the invention,
Figures 13a and 13b are circuit diagrams of two possible embodiments of sensor devices included in the detection unit of a system according to the invention, and
Figures 14, 15 and 16 are electro-pneumatic diagrams which show three different embodiments of an actuation module included in a system according to the invention.

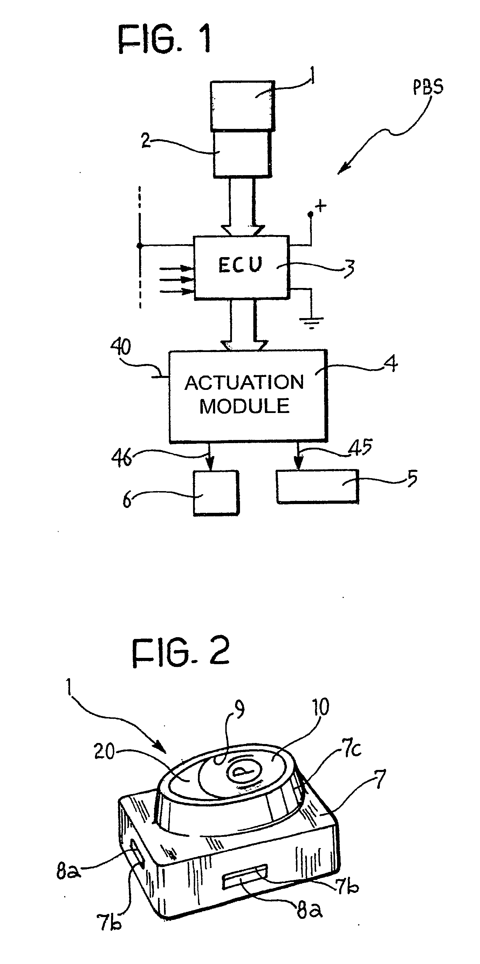

An electronically-controlled parking braking system for commercial motor vehicles according to the present invention is generally indicated PBS in Figure 1.

The system comprises a manually-operated control device 1 connected to a detection unit, generally indicated 2.

As will become clearer from the following description, the control device 1 comprises a movable, manually-operable control member and the detection unit 2 comprises electrical sensors for providing signals indicative of the position of the movable member of the control device.

The detection unit 2 is connected to an electronic processing and control unit ECU 3 arranged for driving an electro-pneumatic actuation module, generally indicated 4, in accordance with predetermined procedures. As will become clear from the following description, the electro-pneumatic actuation module 4 comprises a plurality of solenoid valves which are driven by the processing and control unit 3 and are connected pneumatically to spring parking braking actuators (known *per se*), generally indicated 5, and to a valve unit 6 fitted in the motor vehicle for the control of the braking of any towed vehicle.

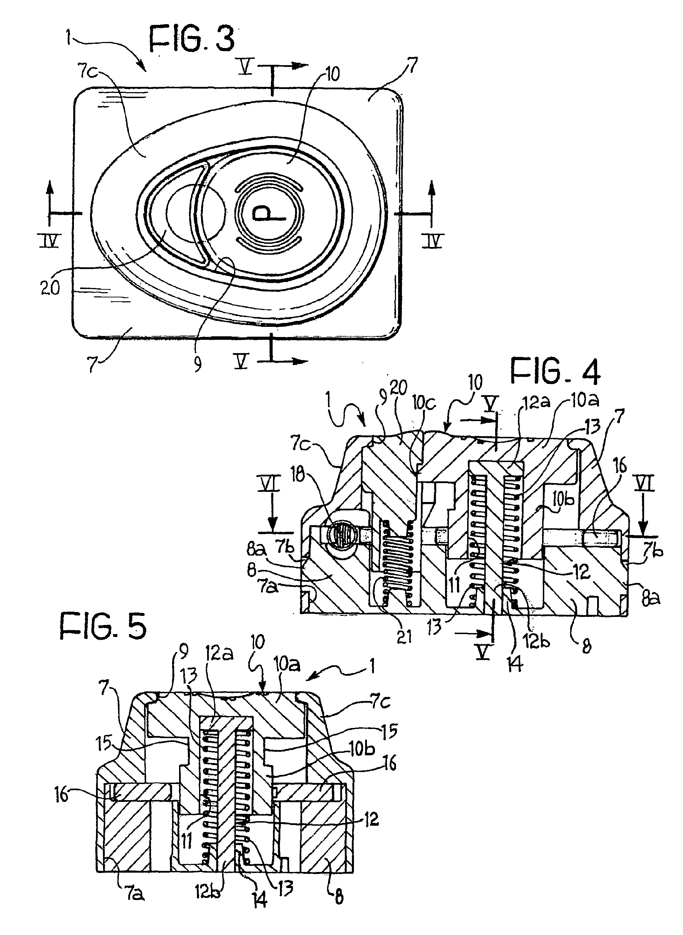

In a first embodiment which is shown by way of example in Figures 2 to 7, the control device 1 comprises a support housing including an upper, hollow body 7 and a lower, shaped body 8 which is inserted in a lower opening 7a of the body 7 (Figures 4 and 5) and is restrained firmly therein as a result of the snap-engagement of tooth-like projections 8a thereof in openings or slots 7b of the upper body (Figures 2 and 4) .

The body 7 of the control device 1 has an upper, substantially tubular protuberance 7c the upper opening of which is indicated 9.

A push-button-like movable operating member, indicated 10, is mounted so as to be translatable in the structure formed by the coupled bodies 7 and 8.

As can best be seen in Figures 4 and 5, the movable operating member 10 is substantially mushroom-shaped with a head 10a and with a tubular shank 10b in which a downwardly open axial cavity 11 is formed.

A substantially nail-like control member 12 with a head 12a and a shank or stem 12b is disposed in the cavity 11 of the operating member 10. A helical spring 13 is arranged around the stem 12b in the cavity 11, between the head 12a of the member 12 and the lower wall of the body 8.

The stem 12b of the member 12 extends at its lower end through a guide passage defined in a tubular projection 14 of the base wall of the lower body 8 (Figures 4 and 5).

By means of the member 12, the helical spring 13 tends to keep the push-button-like operating member 10 in the position shown in Figures 4 and 5 in which the head 10a of the member 10 is in abutment with a turned-over portion of the rim which surrounds the upper opening 9 of the body 7.

As can be seen in particular in Figure 5, adjacent the head 10a, the shank 10b of the operating member 10 has a longitudinal portion the cross-section of which is reduced to form a radial recess 15 which extends around a predominant portion of its periphery.

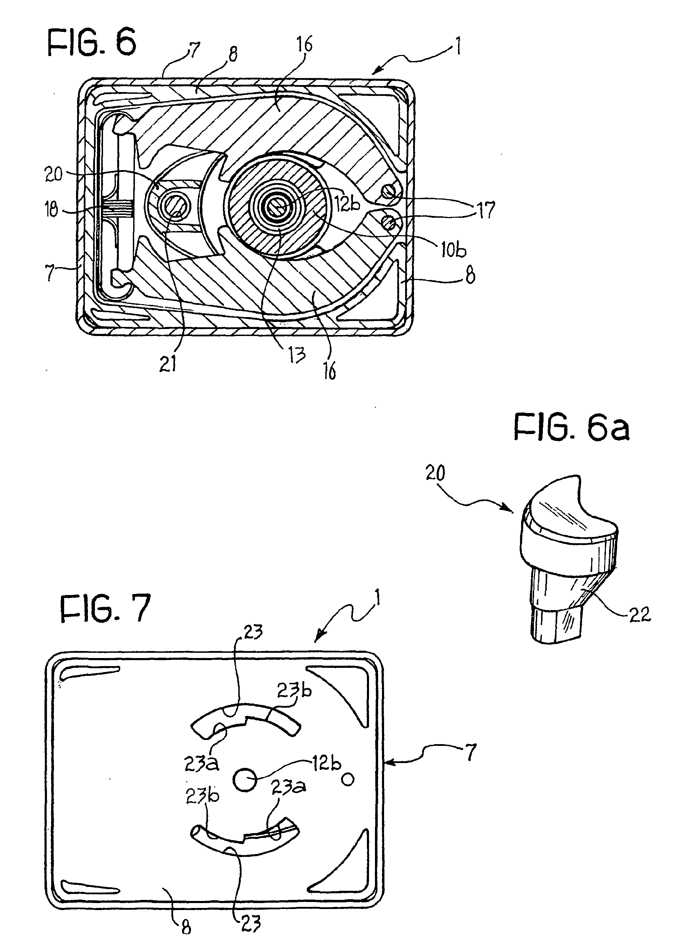

With reference in particular to Figures 4 to 6, two opposed retaining members 16 are mounted so as to be pivotable in a substantially horizontal plane between the two bodies 7 and 8 of the control device 1 and are situated on opposite sides of the shank 10b of the member 10 with which they are associated. As can be seen in particular in Figure 6, the retaining members 16 have respective first ends articulated at 17 to the structure formed by the two bodies 7 and 8 and their respective other ends are disposed between the ends of a tension spring 18 which tends to move them towards one another.

The arrangement described above is such that the operating member 10 can adopt the rest position shown in the drawings in which the larger cross-sectioned end portion of its shank 10b extends between the retaining members 16. From this condition, the operating member 10 can be pressed downwards manually against the action of the reaction spring 13; this causes the operating member to descend together with the associated control member the stem 12b of which then projects below the body 8.

After a downward travel of predetermined length has been performed, the shank 10b of the member 10 has its proximal portion with the radial recess 15 disposed between the retaining members 16. The retaining members 16 engage radially in the recess under the effect of the spring 18. The operating member 10 is thus prevented from returning from this position to the rest position.

However, the longitudinal extent of the portion of the shank 10b which has a reduced cross-section is advantageously greater than the thickness of the retaining members 16 so that, even after the engagement of these members in the recess 15, the operating member 10 can still perform a further downward travel until the lower surface of its head 10a comes into abutment with the retaining members 16.

As will become clear from the following, the first portion of the downward travel of the operating member 10 represents a braking-pressure modulation travel. The further travel that is permitted after the engagement of the retaining members 16 in the recess 15 enables a check or test of the parking braking system to be performed.

An auxiliary release member 20 is arranged so as to be translatable vertically inside the structure formed by the bodies 7 and 8, adjacent the operating member 10, and can be operated manually to release the operating member 10 from the retaining members 16.

In the embodiment shown, the auxiliary release member 20 can be moved downwards from the rest position shown, against the action of a reaction spring 21, which reacts at its lower end against the base wall of the lower body 8.

As can be seen in particular in Figure 4, the head 10a of the operating member 10 has a lateral projection 10c which extends beneath an undercut in the head of the release member 20.

As can be seen in Figure 6a, the push-button-like release member 20 has an intermediate portion with two downwardly converging inclined surfaces, only one of which is visible in the drawing in which it is indicated 22. These inclined surfaces can cooperate in the manner of a wedge with adjacent intermediate portions of the retaining members 16 in a manner such that, when the push-button-like release member 20 is moved downwards, it can move the retaining members 16 apart against the action of the spring 18 so as to release the operating member 10 which can thus then return to the rest position, pulling the release member 20 with it.

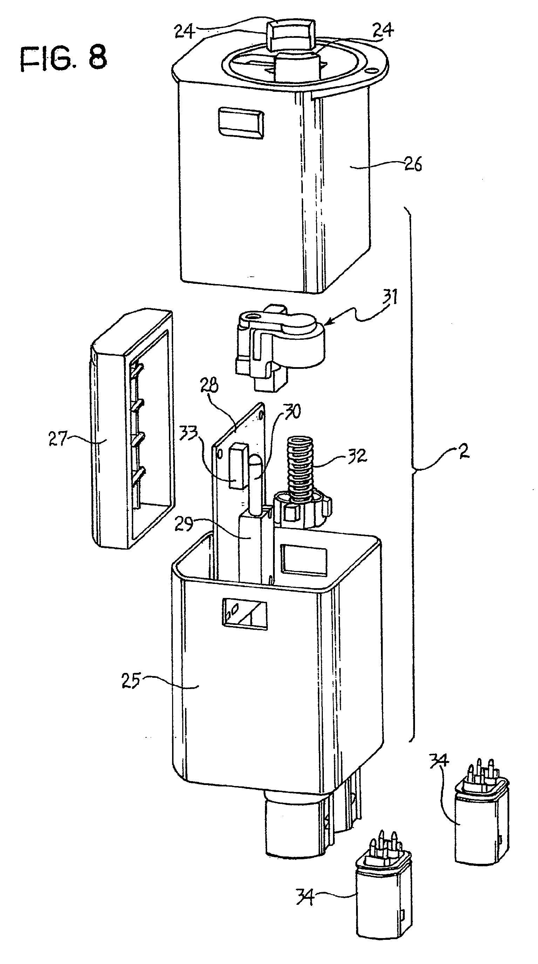

As shown in Figure 7, two arcuate slots 23 are formed in the base wall of the lower body 8 of the control device 1 and are centred substantially about the axis of the stem 12b of the member 12; the slots 23 have respective radially enlarged portions 23a suitable for permitting the insertion of bayonet coupling members 24 (Figure 8) of the detection unit 2, as well as adjacent radially narrow portions 23b suitable for retaining the coupling members 24 after rotation thereof.

Advantageously, as can be seen in particular in Figures 2 and 3, the operating member 10 has a substantially round shape in plan and the auxiliary release member 20 has, in plan, a substantially lunule-like shape which joins with that of the operating member 10 so that the two members 10 and 20 together have a substantially oval configuration in plan.

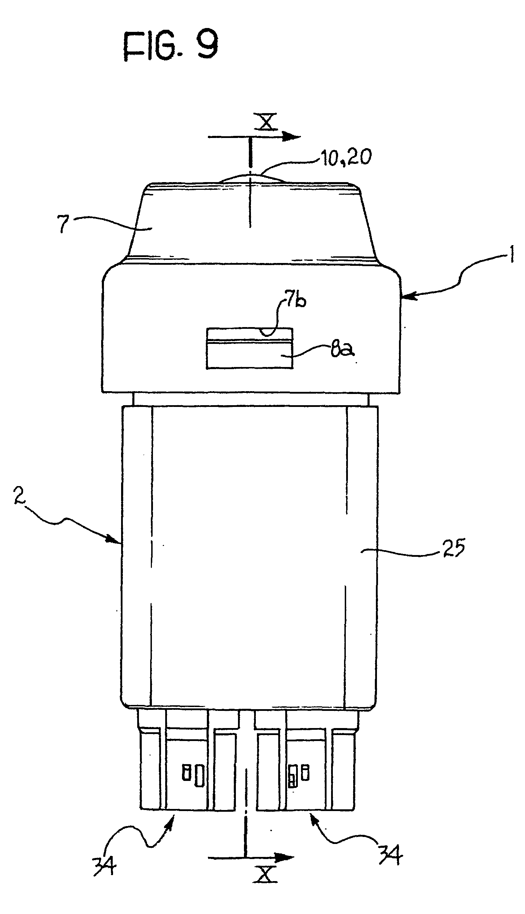

With reference to Figures 8 to 11, in this embodiment, the detection unit 2 comprises an outer casing 25 and an inner body 26 fitted and firmly coupled in the casing by snap-engagement means.

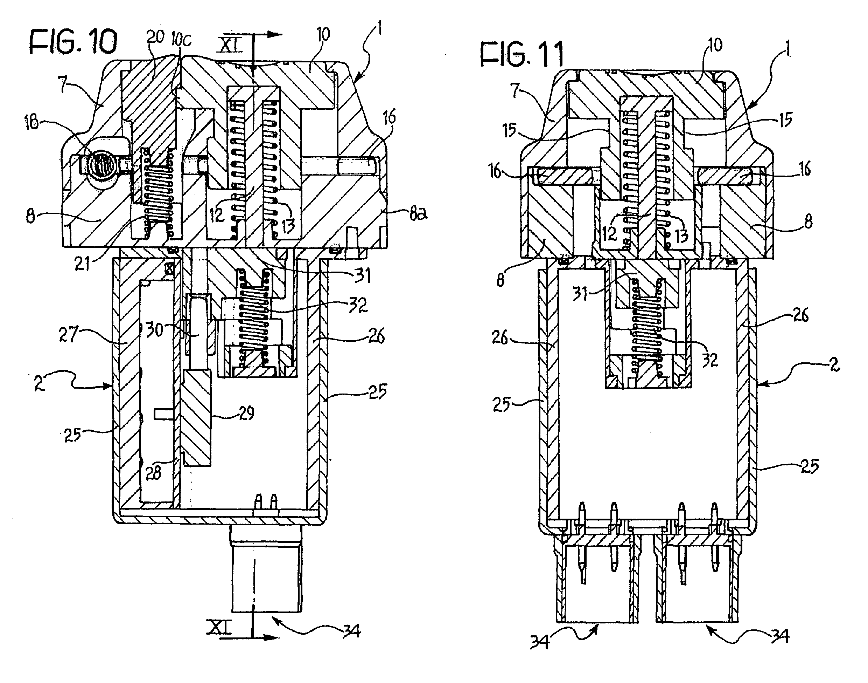

Connected to one side of the body 26 is a substantially dish-like lateral container 27 (Figures 8 and 10) to which a printed circuit board 28 carrying a plurality of electrical and/or electronic devices and/or components is fixed.

In the embodiment shown, a linear position sensor such as a potentiometer 29 is connected to the plate 28 and has, at its top, a push-rod 30 (Figures 8 and 10) which can be pressed and moved downwards as a result of the downward movement of a controlled element or member 31 mounted so as to be translatable vertically in the body 26 against the action of a helical reaction spring 32.

As can be seen in Figures 10 and 11, at rest, the movable member 31 extends facing the distal end of the member 12 associated with the operating member 10. The arrangement is such that, when the operating member 10 is moved downwards, the member 12 enters the body 26 of the detection unit 2 and causes a corresponding downward movement of the member 30 of the linear position sensor 29.

The circuit board 28 may advantageously carry further sensor devices suitable for providing indications relating to the position of the operating member 10 of the control device 1. For example, in Figure 8, the board 28 carries a microswitch 33. This microswitch 33 serves, for example, to actuate the known so-called "wake-up" function of the processing and control unit 3 when the ignition/starting key of the vehicle is switched off.

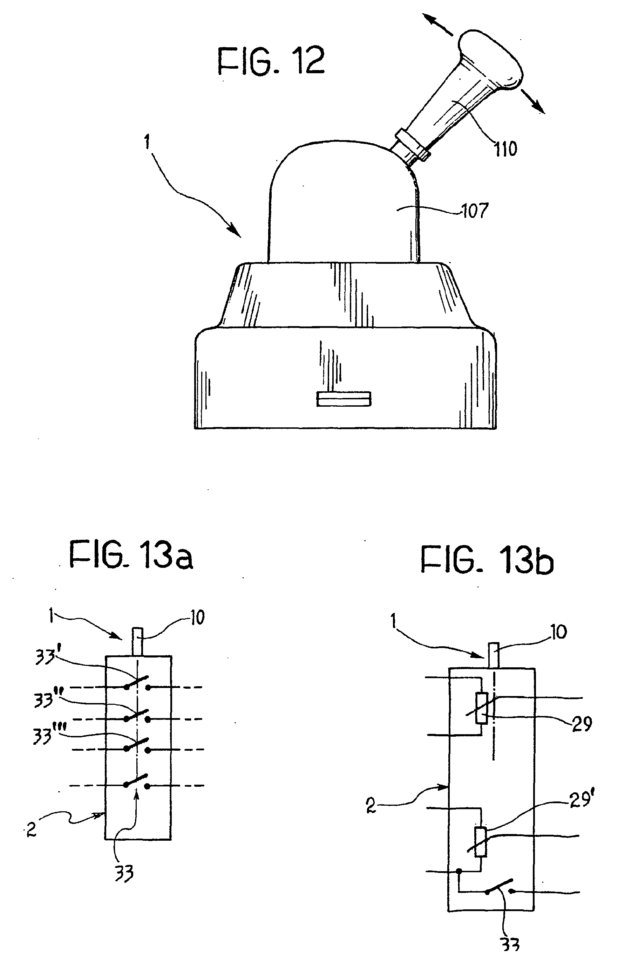

With reference to the schematic views of Figures 13a and 13b, the detection unit 2 may comprise a further plurality of (redundant) microswitches 33', 33", 33"' which can switch when corresponding positions of the operating member 10 are reached, or an additional transducer or sensor 29' (Figure 13b) which can provide an electrical signal that is continuously indicative of the position of the member 10, such as a potentiometric or Hall-effect sensor.

With reference to Figures 8 to 11, electrical connectors 34 are fixed to the base wall of the casing 25 and are connected to the devices carried by the circuit board 28 to enable them to be connected to the electronic processing and control unit 3 (Figure 1).

Figure 12 shows a variant of the control device 1. In this variant, the operating member is no longer constituted by a push-button but by a rocker or hand lever 110 which is pivotable relative to the associated support structure 107. Within this structure and in a known manner not shown, a rotary movement of the rocker or hand lever 110 is converted into a vertical linear movement of a control member similar to the members 10-12 described above.

Similarly, this member may be associated with retaining members for engaging the member after a predetermined travel has been performed and with a push-button or other auxiliary release member, similar to that described above.

From the point of view of its practical operation, the variant of Figure 12 resembles conventional hand-lever pneumatic devices for controlling parking braking.

With reference to the electronic control unit 3 (Figure 1), in a first embodiment, it may be incorporated in the detection unit 2.

Alternatively, however, the processing and control unit 3 may be an external, stand-alone unit.

As a further alternative, in a motor-vehicle provided with an electronic unit for the control of one or more functions (for example, anti-lock braking, engine management or so-called "body-control", etc.) the unit 3 of the system according to the invention may be constituted by the same processing and control unit which controls this or these functions.

In any case, if the motor vehicle is provided with an on-board data-transmission network, for example, a network operating in accordance with the CAN protocol, the electronic processing and control unit 3 of the system of the invention is advantageously connected to this network.

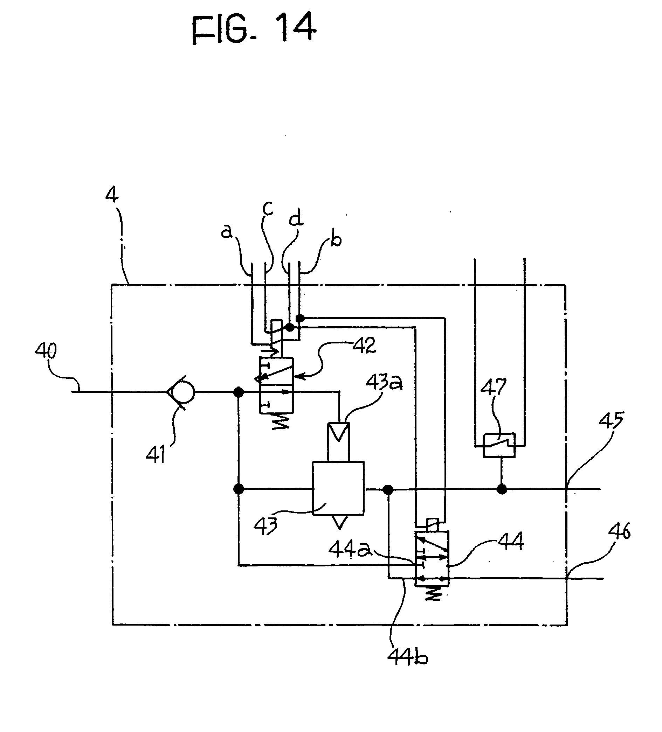

With reference to Figure 14, in a first embodiment, the electro-pneumatic actuation module 4 comprises a compressed-air supply input 40 which is connected, by means of a non-return valve 41, to the input of a bistable solenoid valve 42 for controlling the parking braking. This bistable valve 42 has two control windings (for redundancy), the terminals of which are indicated a, b, c and d.

The non-return valve 41 is also connected to the input of a pneumatic relay valve 43 which has a control input 43a that is connected to the output of the bistable valve 42.

A monostable solenoid valve, indicated 44, has a first input 44a connected to the output of the non-return valve 41 and a second input 44b connected to the output of the relay valve 43.

The solenoid valve 44 can adopt a first (normal or de-energized) condition in which it connects an output of the electro-pneumatic actuation module 4 to the output of the relay valve 43 and a second (energized) condition in which it connects the output 46 of the module 4 to the compressed-air supply input 40 via the non-return valve 41.

The output 46 is intended to be connected to the braking control valve 6 of any trailer.

The electro-pneumatic actuation module 4 has a further output 45 connected to the output of the relay valve 43. An electrical pressure-threshold sensor device 47 (a minimum pressure sensor) is associated with the output 45 and is connected to the electronic processing and control unit 3. The output 45 is intended to be connected to the spring parking braking elements 5.

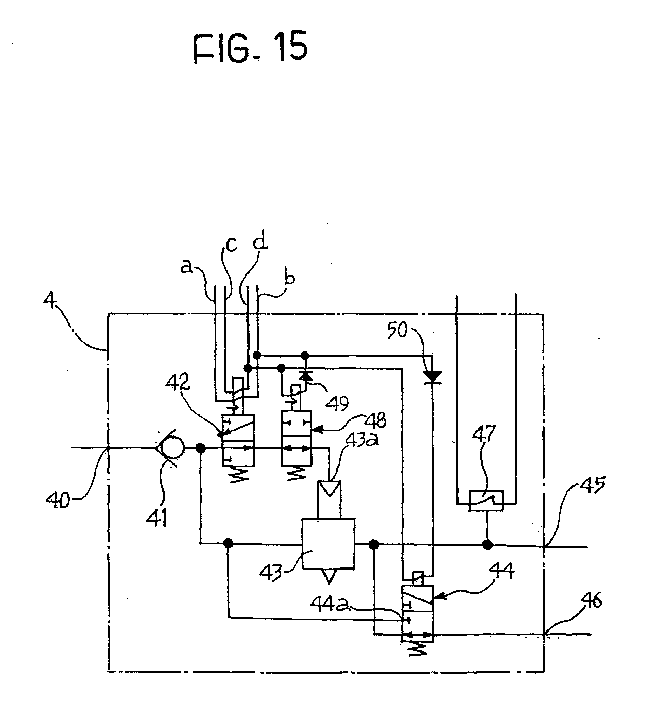

Figure 15 shows a variant of the pneumatic actuation module described above with reference to Figure 14. Parts and elements which have already been described have again been attributed the same reference numerals in Figure 15.

In the variant of Figure 15, a holding solenoid valve 48 is interposed between the output of the bistable solenoid valve 42 and the control input 43a of the pneumatic relay valve 43 and can be driven in an on-off manner by the processing and control unit 3. The solenoid valve 48 can in fact adopt a first condition and a second condition in which it permits and prevents communication between the bistable solenoid valve 42 and the control input of the relay valve 43, respectively, enabling a modulation of the braking pressure to be performed by means of the relay valve 43.

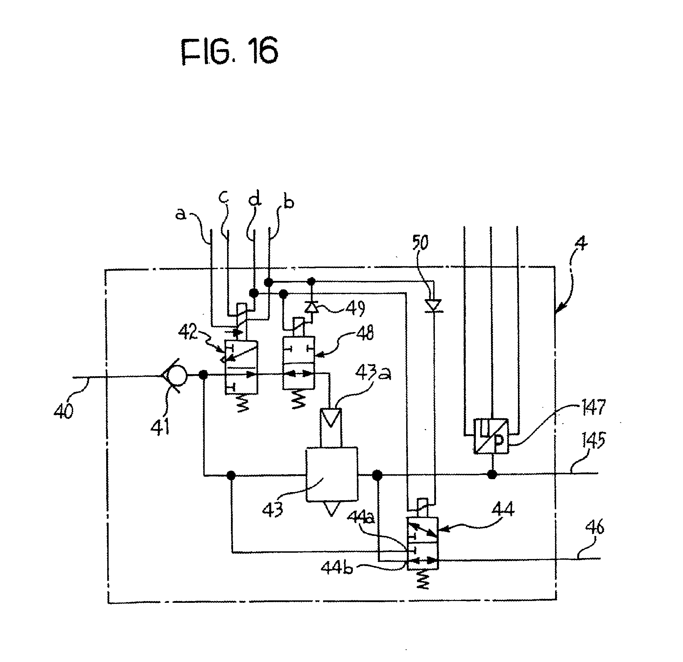

In the variant of Figure 16, the bistable solenoid valve 42 can also be controlled by means of two windings (for redundancy) with four terminals a-d. The holding solenoid valve 48 is connected to the terminals c and d with the interposition of a diode 49 which has its cathode connected to the terminal d. The solenoid valve 44 is also connected between the terminals c and d, in series with a further diode 50 which has its anode connected to the terminal d.

With reference to the diagrams of Figures 14, 15 and 16:
- if a positive voltage is applied between the terminals a and b (with no supply to the terminals c and d), the solenoid valve 42 is disposed in the parking braking condition,
- if the polarity of the voltage between a and b is reversed, this solenoid valve is disposed in the condition in which it allows the vehicle to move; similar remarks apply if the voltage is applied between the terminals c and d (with no supply to a and b).

Moreover, for the diagrams of Figures 15 and 16:
- if a positive voltage is applied between the terminals b and d (with no supply to a and c), the solenoid valve 44 is disposed in the test condition in which the trailer brakes are released and the braking capacity of the tractor is checked,
- if the polarity of the voltage between b and d is reversed (again with no supply to a and c), the solenoid valve 48 is disposed in the "hold" condition in which the pressure at the control input 43a of the relay valve 43 is maintained; if, whilst the solenoid valve 48 is in the hold condition, voltage is also supplied between the terminals d and c (or between the terminals a and b), the bistable solenoid valve 42 is disposed in the parking braking condition (or in the condition in which movement of the vehicle is permitted).

For the diagram of Figure 14, the test condition can be implemented by the application of a voltage between the terminals b and d of the bistable solenoid valve 42, leaving the terminals a and c disabled.

In Figure 16, an electrical pressure transducer 147, instead of a simple pressure-threshold switch, is disposed at the output of the pneumatic relay valve 43 and can supply to the electronic processing and control unit 3 signals that are continuously indicative of the pressure detected so as to provide feedback control.

The system described above enables a plurality of functions to be implemented.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. An electronically-controlled parking braking system particularly for a commercial motor vehicle, the system comprising:
a manually-operated control device (1) having a first support structure (7, 8) and a movable control member (10),
electronic processing and control means (3), and
an electro-pneumatic actuation module (4) including a plurality of solenoid-valve means (42, 44, 48) to be controlled by the electronic processing and control means (3) and to be connected pneumatically to parking braking actuators (5);
the system being **characterised in that** it comprises further a detection unit (2) connected to said manually-operated control device (1) and comprising a second support structure (25, 26) which is coupled to that of the control device (1) and which carries sensor means (29, 33) providing electrical signals indicative of the position of the movable member (10) of the control device (1), and **in that** the movable control member (10) of said control device (1) is arranged so as to be able to perform a first portion of downward travel representing a parking braking pressure modulation travel, and a further travel enabling a check or test of the parking braking system to be performed; said actuation module (4) being also connected to control valve means (6) installed in the motor vehicle for controlling the braking of a towed vehicle; the electronic processing and control means being connected to the position sensor means (29,33).

2. A system according to Claim 1, in which the control device (1) comprises a movable operating member or lever (110), pivotable relative to the associated support structure (107).

3. A system according to Claim 1, in which the control device (1) comprises a movable operating member (10) in the form of a push-button, translatable mutually relative to the associated support structure (7, 8), against the action of first opposing resilient means (13).

4. A system according to Claim 2 or Claim 3, in which a control member (12), translatable relative to the first support structure (7, 8) is associated with the operating member (10).

5. A system according to Claims 3 and 4, in which retaining means (16-18) are associated with the push-button operating member (10) and are arranged to engage the operating member (10) in an engagement position after it has performed a predetermined travel from the rest position, and prevent the return of the member (10) to the rest position.

6. A system according to Claim 5, in which the retaining means (16-18) allow the operating member (10) to perform said further travel beyond said engagement position.

7. A system according to Claim 5 or Claim 6, in which the retaining means comprise at least one retaining member (16) which is mounted for pivoting in the first support structure (7, 8) in a plane transverse the axis of movement of the operating member (10) and which can engage in a narrower portion (15) of the cross-section of the operating member (10), under the action of second resilient means (18).

8. A system according to Claim 7, in which the retaining means comprise a pair of retaining members (16) which are mounted for pivoting in opposite directions in the first support structure (7, 8), in a plane transverse to the axis of movement of the operating member (10), and can engage a narrower portion (15) of the cross-section of the operating member (10) from opposite sides, under the action of the second resilient means (18).

9. A system according to any one of Claims 5 to 8, in which an auxiliary, manually-operated release member (20) is associated with the operating member (10) and can release the operating member (10) from the retaining means (16-18).

10. A system according to Claim 9, in which the auxiliary release member (20) is also in the form of a push-button and is disposed adjacent the operating member (10), which has a lateral projection (10c) capable of pulling the auxiliary release member (20) towards the rest position, under the action of the resilient means (13), after a release of the retaining means (16-18).

11. A system according to Claim 10, in which the operating member (10) has a substantially round shape in plan and the auxiliary release member (20) has, in plan, a substantially lunule-like shape which joins with that of the operating member (10) so as to form a substantially oval overall shape.

12. A system according to any one of the preceding claims, in which the detection unit (2) comprises:
a controlled movable element (31) with which are associated third resilient means (32) which tend to keep the movable element (31) in engagement with the operating member (10, 12) so that they can translate together, and
electrical sensor devices (29; 33) carried by the support structure (25-26) of the detection unit (2) and suitable for providing electrical signals indicative of the position of the controlled movable member (31).

13. A system according to Claim 12, in which the electrical sensor devices comprise a plurality of electrical switches (33; 33'; 33"; 33"') which can be operated as a result of the movement of the controlled movable member (31).

14. A system according to Claim 12, in which the electrical sensor devices comprise at least one sensor (29, 29') which can provide an electrical signal that is continuously indicative of the position of the controlled movable member (31), such as a potentiometric or Hall-effect sensor.

15. A system according to any one of the preceding claims, in which the support structure (25, 26) of the detection unit (2) and the support structure (7, 8) of the control device (1) are provided with quick-coupling and quick-release mutual connection means (23, 24).

16. A system according to any one of the preceding claims, in which the processing and control means comprise an electronic control unit (3) incorporated in the detection unit (2).

17. A system according to any one of Claims 1 to 15, in which the processing and control means comprise a stand-alone electronic unit (3).

18. A system according to any one of Claims 1 to 15 for a motor vehicle provided with an electronic control unit for a predetermined function, and in which the processing and control means (3) are constituted by the said electronic control unit of the said function.

19. A system according to any one of the preceding claims, in which the electro-pneumatic actuation module (4) comprises a compressed-air supply input (40) which is connected, by means of a non-return valve (41), to:
- the input of a bistable solenoid valve (42) for controlling the parking braking,
- the input of a pneumatic relay valve (43) which has a control input (43a) connected to the output of the bistable solenoid-valve (42), and
- a first input (44a) of a monostable solenoid valve (44) having a second input (44b) connected to the output of the relay valve (43), the monostable solenoid valve (44) being capable of adopting a first condition and a second condition, that is, a normal or de-energized condition and an energized condition, respectively, in which it connects an output (46) of the actuation module (4) to the output of the relay valve (43), or to the compressed-air supply input (40), respectively,
the actuation module (4) having a last output (45) connected to the output of the relay valve (43).

20. A system according to Claim 19, in which a holding solenoid valve (48), controllable in on-off mode by the processing and control means (3), is interposed between the output of the bistable solenoid valve (42) and the control input (43a) of the pneumatic relay valve (43), the holding solenoid valve (48) being capable of adopting a first condition and a second condition in which it permits and prevents communication between the bistable solenoid valve (42) and the control input (43a) of the relay valve (43), respectively.

21. A system according to Claim 19 or Claim 20, in which a pressure-sensor device (47) connected to the processing and control means (3) is associated with the output of the relay valve (43).

22. A system according to Claim 21, in which the pressure-sensor device is a pressure-threshold electrical switch (47).

23. A system according to Claim 20 and Claim 21, in which the electrical pressure-sensor device is an electrical pressure transducer (147).

24. A system according to any one of Claims 19 to 23, in which the bistable solenoid valve (42) has two control windings.

25. A system according to Claim 24, in which the monostable solenoid valve (44) has a control winding connected between the two windings of the bistable solenoid valve (42).

26. A system according to Claims 20, 24 and 25, in which the holding solenoid valve (48) is also connected between the two control windings of the bistable solenoid valve (42).

27. A system according to Claim 26, in which conduction control means (48, 50) are arranged in series with the monostable solenoid valve (44) and with the holding solenoid valve (48), to enable the solenoid valves (42, 44, 48) to be driven in predetermined ways.

## Patentansprüche

1. Elektronisch gesteuertes Feststellbremssystem insbesondere für ein kommerzielles Kraftfahrzeug, wobei das System umfasst:
eine manuell bediente Steuervorrichtung (1) mit einer ersten Stützstruktur (7, 8) und einem beweglichen Steuerelement (10),
eine elektronische Verarbeitungs- und Steuereinrichtung (3) und
ein elektropneumatisches Betätigungsmodul (4) mit einer Vielzahl von Magnetventileinrichtungen (42, 44, 48), die durch die elektronische Verarbeitungs- und Steuereinrichtung (3) gesteuert werden sollen und mit Feststellbremsstellgliedern (5) pneumatisch verbunden werden sollen;
wobei das System **dadurch gekennzeichnet ist, dass** es ferner eine Erfassungseinheit (2) umfasst, die mit der manuell bedienten Steuervorrichtung (1) verbunden ist und eine zweite Stützstruktur (25, 26) umfasst, die mit jener der Steuervorrichtung (1) gekoppelt ist und die Sensoreinrichtungen (29, 33) trägt, die elektrische Signale liefern, die die Position des beweglichen Elements (10) der Steuervorrichtung (1) angeben, und dass das bewegliche Steuerelement (10) der Steuervorrichtung (1) so angeordnet ist, dass es einen ersten Teil einer Abwärtsbewegung, die eine Feststellbremsdruck-Modulationsbewegung darstellt, und eine weitere Bewegung, die ermöglicht, dass eine Prüfung oder ein Test des Feststellbremssystems durchgeführt wird, durchführen kann; wobei das Betätigungsmodul (4) auch mit einer Steuerventileinrichtung (6) verbunden ist, die im Kraftfahrzeug installiert ist, um das Bremsen eines Anhängefahrzeugs zu steuern, wobei die elektronische Verarbeitungs- und Steuereinrichtung mit den Positionssensoreinrichtungen (29, 33) verbunden ist.

2. System nach Anspruch 1, wobei die Steuervorrichtung (1) ein bewegliches Bedienelement oder einen beweglichen Bedienhebel (110) umfasst, das bzw. der relativ zur zugehörigen Stützstruktur (107) schwenkbar ist.

3. System nach Anspruch 1, wobei die Steuervorrichtung (1) ein bewegliches Bedienelement (10) in Form eines Druckknopfs umfasst, der relativ zur zugehörigen Stützstruktur (7, 8) gegen die Wirkung einer ersten entgegenwirkenden elastischen Einrichtung (13) wechselseitig verschiebbar ist.

4. System nach Anspruch 2 oder Anspruch 3, wobei ein Steuerelement (12), das relativ zur ersten Stützstruktur (7, 8) verschiebbar ist, dem Bedienelement (10) zugeordnet ist.

5. System nach den Ansprüchen 3 und 4, wobei Rückhalteeinrichtungen (16-18) dem Druckknopf-Bedienelement (10) zugeordnet sind und so angeordnet sind, dass sie mit dem Bedienelement (10) in einer Eingriffsposition in Eingriff kommen, nachdem es eine vorbestimmte Bewegung aus der Ruheposition durchgeführt hat, und die Rückkehr des Elements (10) in die Ruheposition verhindern.

6. System nach Anspruch 5, wobei die Rückhalteeinrichtungen (16-18) ermöglichen, dass das Bedienelement (10) die weitere Bewegung über die Eingriffsposition hinaus durchführt.

7. System nach Anspruch 5 oder Anspruch 6, wobei die Rückhalteeinrichtungen mindestens ein Rückhalteelement (16) umfassen, das zum Schwenken in der ersten Stützstruktur (7, 8) in einer Ebene quer zur Bewegungsachse des Bedienelements (10) montiert ist und das mit einem schmäleren Teil (15) des Querschnitts des Bedienelements (10) unter der Wirkung einer zweiten elastischen Einrichtung (18) in Eingriff kommen kann.

8. System nach Anspruch 7, wobei die Rückhalteeinrichtungen ein Paar von Rückhalteelementen (16) umfassen, die zum Schwenken in entgegengesetzten Richtungen in der ersten Stützstruktur (7, 8) in einer Ebene quer zur Bewegungsachse des Bedienelements (10) montiert sind und mit einem schmäleren Teil (15) des Querschnitts des Bedienelements (10) von entgegengesetzten Seiten unter der Wirkung der zweiten elastischen Einrichtung (18) in Eingriff kommen können.

9. System nach einem der Ansprüche 5 bis 8, wobei ein manuell bedientes Hilfslöseelement (20) dem Bedienelement (10) zugeordnet ist und das Bedienelement (10) von den Rückhalteeinrichtungen (16-18) lösen kann.

10. System nach Anspruch 9, wobei das Hilfslöseelement (20) auch in Form eines Druckknopfs vorliegt und benachbart zum Bedienelement (10) angeordnet ist, das einen seitlichen Vorsprung (10c) aufweist, der das Hilfslöseelement (20) unter der Wirkung der elastischen Einrichtung (13) nach einem Lösen der Rückhalteeinrichtungen (16-18) in Richtung der Ruheposition ziehen kann.

11. System nach Anspruch 10, wobei das Bedienelement (10) eine im Wesentlichen runde Form in der Ebene aufweist und das Hilfslöseelement (20) in der Ebene eine im Wesentlichen halbmondartige Form aufweist, die sich mit jener des Bedienelements (10) verbindet, um eine im Wesentlichen ovale Gesamtform zu bilden.

12. System nach einem der vorangehenden Ansprüche, wobei die Erfassungseinheit (2) umfasst:
ein gesteuertes bewegliches Element (31), dem eine dritte elastische Einrichtung (32) zugeordnet ist, die ausgelegt ist, das bewegliche Element (31) mit dem Bedienelement (10, 12) in Eingriff zu halten, so dass sie sich zusammen verschieben können, und
elektrische Sensorvorrichtungen (29; 33), die durch die Stützstruktur (25-26) der Erfassungseinheit (2) getragen werden und zum Liefern von elektrischen Signalen, die die Position des gesteuerten beweglichen Elements (31) angeben, geeignet sind.

13. System nach Anspruch 12, wobei die elektrischen Sensorvorrichtungen eine Vielzahl von elektrischen Schaltern (33; 33'; 33"; 33"') umfassen, die infolge der Bewegung des gesteuerten beweglichen Elements (31) betätigt werden können.

14. System nach Anspruch 12, wobei die elektrischen Sensorvorrichtungen mindestens einen Sensor (29, 29') umfassen, der ein elektrisches Signal liefern kann, das kontinuierlich die Position des gesteuerten beweglichen Elements (31) angibt, wie z.B. ein Potentiometer- oder Hall-Effekt-Sensor.

15. System nach einem der vorangehenden Ansprüche, wobei die Stützstruktur (25, 26) der Erfassungseinheit (2) und die Stützstruktur (7, 8) der Steuervorrichtung (1) mit gegenseitigen Schnellkopplungs- und Schnelllöse-Verbindungseinrichtungen (23, 24) versehen sind.

16. System nach einem der vorangehenden Ansprüche, wobei die Verarbeitungs- und Steuereinrichtung eine elektronische Steuereinheit (3) umfasst, die in die Erfassungseinheit (2) integriert ist.

17. System nach einem der Ansprüche 1 bis 15, wobei die Verarbeitungs- und Steuereinrichtung eine eigenständige elektronische Einheit (3) umfasst.

18. System nach einem der Ansprüche 1 bis 15 für ein Kraftfahrzeug, das mit einer elektronischen Steuereinheit für eine vorbestimmte Funktion versehen ist und in dem die Verarbeitungs- und Steuereinrichtung (3) durch die elektronische Steuereinheit der Funktion gebildet ist.

19. System nach einem der vorangehenden Ansprüche, wobei das elektropneumatische Betätigungsmodul (4) einen Druckluftzuführeingang (40) umfasst, der mittels eines Rückschlagventils (41) mit Folgendem verbunden ist:
- dem Eingang eines bistabilen Magnetventils (42) zum Steuern des Feststellbremsens,
- dem Eingang eines pneumatischen Relaisventils (43), das einen Steuereingang (43a) aufweist, der mit dem Ausgang des bistabilen Magnetventils (42) verbunden ist, und
- einem ersten Eingang (44a) eines monostabilen Magnetventils (44) mit einem zweiten Eingang (44b), der mit dem Ausgang des Relaisventils (43) verbunden ist, wobei das monostabile Magnetventil (44) in der Lage ist, einen ersten Zustand und einen zweiten Zustand, das heißt einen normalen oder abgeschalteten Zustand bzw. einen erregten Zustand, anzunehmen, in dem es einen Ausgang (46) des Betätigungsmoduls (4) mit dem Ausgang des Relaisventils (43) bzw. mit dem Druckluftzuführeingang (40) verbindet, wobei das Betätigungsmodul (4) einen letzten Ausgang (45) aufweist, der mit dem Ausgang des Relaisventils (43) verbunden ist.

20. System nach Anspruch 19, wobei ein Haltemagnetventil (48), das in einer Ein-Aus-Betriebsart durch die Verarbeitungs- und Steuereinrichtung (3) steuerbar ist, zwischen den Ausgang des bistabilen Magnetventils (42) und den Steuereingang (43a) des pneumatischen Relaisventils (43) eingefügt ist, wobei das Haltemagnetventil (48) in der Lage ist, einen ersten Zustand und einen zweiten Zustand anzunehmen, in dem es eine Verbindung zwischen dem bistabilen Magnetventil (42) und dem Steuereingang (43a) des Relaisventils (43) gestattet bzw. verhindert.

21. System nach Anspruch 19 oder Anspruch 20, wobei eine Drucksensorvorrichtung (47), die mit der Verarbeitungs- und Steuereinrichtung (3) verbunden ist, dem Ausgang des Relaisventils (43) zugeordnet ist.

22. System nach Anspruch 21, wobei die Drucksensorvorrichtung ein elektrischer Druckschwellenschalter (47) ist.

23. System nach Anspruch 20 und Anspruch 21, wobei die elektrische Drucksensorvorrichtung ein elektrischer Druckwandler (147) ist.

24. System nach einem der Ansprüche 19 bis 23, wobei das bistabile Magnetventil (42) zwei Steuerwicklungen aufweist.

25. System nach Anspruch 24, wobei das monostabile Magnetventil (44) eine Steuerwicklung aufweist, die zwischen die zwei Wicklungen des bistabilen Magnetventils (42) geschaltet ist.

26. System nach den Ansprüchen 20, 24 und 25, wobei das Haltemagnetventil (48) auch zwischen die zwei Steuerwicklungen des bistabilen Magnetventils (42) geschaltet ist.

27. System nach Anspruch 26, wobei Leitungssteuereinrichtungen (48, 50) in Reihe mit dem monostabilen Magnetventil (44) und mit dem Haltemagnetventil (48) angeordnet sind, um zu ermöglichen, dass die Magnetventile (42, 44, 48) in vorbestimmten Weisen angesteuert werden.

## Revendications

1. Système de freinage de stationnement commandé électroniquement, en particulier pour un véhicule automobile commercial, le système comprenant :
un dispositif de commande actionné manuellement (1) comportant une première structure de support (7, 8) et un élément de commande mobile (10),
des moyens de traitement et de commande électroniques (3), et
un module d'actionnement électropneumatique (4) comprenant une pluralité de moyens formant électrovannes (42, 44, 48) à commander par les moyens de traitement et de commande électroniques (3) et à connecter pneumatiquement à des actionneurs de freinage de stationnement (5) ;
le système étant **caractérisé en ce qu'**il comprend en outre une unité de détection (2) connectée audit dispositif de commande actionné manuellement (1) et comprenant une deuxième structure de support (25, 26) qui est accouplée à celle du dispositif de commande (1) et qui supporte des moyens formant capteurs (29, 33) fournissant des signaux électriques indicatifs de la position de l'élément mobile (10) du dispositif de commande (1), et **en ce que** l'élément de commande mobile (10) dudit dispositif de commande (1) est agencé de manière à être capable d'effectuer une première partie d'un déplacement vers le bas représentant un déplacement de modulation de pression de freinage de stationnement et un autre déplacement permettant d'effectuer un contrôle ou un test du système de freinage de stationnement ; ledit module d'actionnement (4) étant également relié à des moyens formant vanne de commande (6) installés dans le véhicule automobile pour commander le freinage d'un véhicule remorqué ; les moyens de traitement et de commande électroniques étant connectés aux moyens formant capteur de position (29, 33).

2. Système selon la revendication 1, dans lequel le dispositif de commande (1) comprend un élément d'actionnement ou levier (110) mobile, capable de pivoter par rapport à la structure de support (107) associée.

3. Système selon la revendication 1, dans lequel le dispositif de commande (1) comprend un élément d'actionnement (10) mobile sous la forme d'un bouton-poussoir, pouvant être translaté mutuellement par rapport à la structure de support (7, 8) associée, contre l'action de premiers moyens élastiques (13) opposés.

4. Système selon la revendication 2 ou la revendication 3, dans lequel un élément de commande (12), pouvant être translaté par rapport à la première structure de support (7, 8) est associé à l'élément d'actionnement (10).

5. Système selon les revendications 3 et 4, dans lequel des moyens de retenue (16 à 18) sont associés à l'élément d'actionnement à bouton-poussoir (10) et sont agencés pour venir en prise avec l'élément d'actionnement (10) dans une position de mise en prise après qu'il a effectué un déplacement prédéterminé par rapport à la position de repos, et pour empêcher le retour de l'élément (10) à la position de repos.

6. Système selon la revendication 5, dans lequel les moyens de retenue (16 à 18) permettent à l'élément d'actionnement (10) d'effectuer ledit déplacement supplémentaire au-delà de ladite position de mise en prise.

7. Système selon la revendication 5 ou la revendication 6, dans lequel les moyens de retenue comprennent au moins un élément de retenue (16) qui est monté pour pivoter dans la première structure de support (7, 8) dans un plan transversal à l'axe de déplacement de l'élément d'actionnement (10) et qui peut venir en prise dans une partie plus étroite (15) de la section de l'élément d'actionnement (10), sous l'action de deuxièmes moyens élastiques (18).

8. Système selon la revendication 7, dans lequel les moyens de retenue comprennent une paire d'éléments de retenue (16) qui sont montés pour pivoter dans des directions opposées dans la première structure de support (7, 8), dans un plan transversal à l'axe de déplacement de l'élément d'actionnement (10), et qui peuvent venir en prise avec une partie plus étroite (15) de la section de l'élément d'actionnement (10) à partir de côtés opposés, sous l'action des deuxièmes moyens élastiques (18).

9. Système selon l'une quelconque des revendications 5 à 8, dans lequel un élément de libération auxiliaire (20) actionné manuellement est associé à l'élément d'actionnement (10) et peut libérer l'élément d'actionnement (10) des moyens de retenue (16 à 18).

10. Système selon la revendication 9, dans lequel l'élément de libération auxiliaire (20) a également la forme d'un bouton-poussoir et est disposé adjacent à l'élément d'actionnement (10), qui comporte une protubérance latérale (10c) capable de tirer l'élément de libération auxiliaire (20) vers la position de repos, sous l'action des moyens élastiques (13), après une libération des moyens de retenue (16 à 18).

11. Système selon la revendication 10, dans lequel l'élément d'actionnement (10) a une forme sensiblement ronde dans le plan et l'élément de libération auxiliaire (20) a, dans le plan, une forme sensiblement similaire à une lunule qui est jointe à celle de l'élément d'actionnement (10) de manière à obtenir une forme globale sensiblement ovale.

12. Système selon l'une quelconque des revendications précédentes, dans lequel l'unité de détection (2) comprend :
un élément mobile commandé (31) auquel des troisièmes moyens élastiques (32) sont associés, lesquels ont tendance à maintenir l'élément mobile (31) en prise avec l'élément d'actionnement (10, 12) de sorte qu'ils puissent se déplacer ensemble, et
des dispositifs formant capteurs électriques (29 ; 33) supportés par la structure de support (25-26) de l'unité de détection (2) et appropriés pour fournir des signaux électriques indicatifs de la position de l'élément mobile commandé (31).

13. Système selon la revendication 12, dans lequel les dispositifs formant capteurs électriques comprennent une pluralité de commutateurs électriques (33 ; 33' ; 33" ; 33"') qui peuvent être actionnés en conséquence du déplacement de l'élément mobile commandé (31).

14. Système selon la revendication 12, dans lequel les dispositifs formant capteurs électriques comprennent au moins un capteur (29, 29') qui peut fournir un signal électrique qui est continûment indicatif de la position de l'élément mobile commandé (31), tel qu'un capteur potentiométrique ou à effet Hall.

15. Système selon l'une quelconque des revendications précédentes, dans lequel la structure de support (25, 26) de l'unité de détection (2) et la structure de support (7, 8) du dispositif de commande (1) sont pourvues de moyens de raccordement mutuel à accouplement rapide et libération rapide (23, 24).

16. Système selon l'une quelconque des revendications précédentes, dans lequel les moyens de traitement et de commande comprennent une unité de commande électronique (3) incorporée dans l'unité de détection (2).

17. Système selon l'une quelconque des revendications 1 à 15, dans lequel les moyens de traitement et de commande comprennent une unité électronique autonome (3).

18. Système selon l'une quelconque des revendications 1 à 15 pour un véhicule automobile pourvu d'une unité de commande électronique pour une fonction prédéterminée, et dans lequel les moyens de traitement et de commande (3) sont constitués par ladite unité de commande électronique de ladite fonction.

19. Système selon l'une quelconque des revendications précédentes, dans lequel le module d'actionnement électropneumatique (4) comprend une entrée d'alimentation en air comprimé (40) qui est raccordée, au moyen d'une vanne anti-retour (41), à :
- l'entrée d'une électrovanne bistable (42) pour commander le freinage de stationnement,
- l'entrée d'une vanne relais pneumatique (43) qui a une entrée de commande (43a) connectée à la sortie de l'électrovanne bistable (42), et
- une première entrée (44a) d'une électrovanne monostable (44) ayant une deuxième entrée (44b) connectée à la sortie de la vanne relais (43), l'électrovanne monostable (44) étant capable d'adopter une première condition et une deuxième condition, c'est-à-dire, un état normal ou non alimenté et un état alimenté, respectivement, dans lesquelles elle connecte une sortie (46) du module d'actionnement (4) à la sortie de la vanne relais (43), ou à l'entrée d'alimentation en air comprimé (40), respectivement,
le module d'actionnement (4) ayant une dernière sortie (45) connectée à la sortie de la vanne relais (43).

20. Système selon la revendication 19, dans lequel une électrovanne de maintien (48), pouvant être commandée dans un mode tout ou rien par les moyens de traitement et de commande (3), est interposée entre la sortie de l'électrovanne bistable (42) et l'entrée de commande (43a) de la vanne relais pneumatique (43), l'électrovanne de maintien (48) étant capable d'adopter un premier état et un deuxième état dans lesquelles elle permet et empêche une communication entre l'électrovanne bistable (42) et l'entrée de commande (43a) de la vanne relais (43), respectivement.

21. Système selon la revendication 19 ou la revendication 20, dans lequel un dispositif formant capteur de pression (47) connecté aux moyens de traitement et de commande (3) est associé à la sortie de la vanne relais (43).

22. Système selon la revendication 21, dans lequel le dispositif formant capteur de pression est un commutateur électrique à seuil de pression (47).

23. Système selon la revendication 20 et la revendication 21, dans lequel le dispositif formant capteur de pression électrique est un transducteur de pression électrique (147).

24. Système selon l'une quelconque des revendications 19 à 23, dans lequel l'électrovanne bistable (42) comporte deux enroulements de commande.

25. Système selon la revendication 24, dans lequel l'électrovanne monostable (44) a un enroulement de commande connecté entre les deux enroulements de l'électrovanne bistable (42).

26. Système selon les revendications 20, 24 et 25, dans lequel l'électrovanne de maintien (48) est également connectée entre les deux enroulements de commande de l'électrovanne bistable (42).

27. Système selon la revendication 26, dans lequel des moyens de commande de conduction (48, 50) sont agencés en série avec l'électrovanne monostable (44) et avec l'électrovanne de maintien (48), pour permettre la commande des électrovannes (42, 44, 48) de manières prédéterminées.
